Europäisches Patentamt

European Patent Office

Office européen des brevets

(11) Numéro de publication: **0 239 707 B1**

# FASCICULE DE BREVET EUROPEEN

(45) Date de publication de fascicule du brevet: **08.04.92**

(51) Int. Cl.5: **C08L 27/16**, F16L 9/14, //(C08L27/16,21:00)

(21) Numéro de dépôt: **86402961.6**

(22) Date de dépôt: **30.12.86**

Le dossier contient des informations techniques présentées postérieurement au dépôt de la demande et ne figurant pas dans le présent fascicule.

(54) **Composite à base de polyfluorure de vinylidène à tenue améliorée au contact des hydrocarbures - application à la fabrication de tube pour l'industrie pétrolière.**

(30) Priorité: **07.01.86 FR 8600136**

(43) Date de publication de la demande: **07.10.87 Bulletin 87/41**

(45) Mention de la délivrance du brevet: **08.04.92 Bulletin 92/15**

(84) Etats contractants désignés: **BE CH DE FR GB IT LI LU NL SE**

(56) Documents cités:
US-A- 3 541 039

PATENT ABSTRACTS OF JAPAN, vol. 2, no. 31 (C-77), 27 février 1978, page 4265 C 77

Chemical Abstracts, vol 88, 1978, page 34, no 106262u

(73) Titulaire: **ATOCHEM**
**4 & 8, Cours Michelet La Défense 10**
**F-92800 Puteaux(FR)**

(72) Inventeur: **Guerin, Bernard**
**3 Clos de Bures**
**F-91440 Bures sur Yvette(FR)**
Inventeur: **Strassel, Albert**
**30, Rue Pasteur**
**F-69600 Oullins(FR)**

(74) Mandataire: **Foiret, Claude et al**
**ATOCHEM Département Propriété Industrielle**
**F-92091 Paris la Défense 10 Cédex 42(FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

Rank Xerox (UK) Business Services

## Description

La présente invention concerne l'amélioration de la tenue du polyfluorure de vinylidène (PVDF), et plus particulièrement de sa flexibilité, au contact des hydrocarbures. Cette amélioration est apportée en incorporant un élastomère au PVDF. Par PVDF on entend non seulement l'homopolymère, mais encore les copolymères obtenus par copolymérisation d'au moins 70 % en poids de fluorure de vinylidène avec un autre monomère fluoré. Toutefois l'invention s'applique plus particulièrement à l'homopolymère.

Le PVDF est un polymère semi cristallin dont l'essentiel des propriétés mécaniques, électriques, thermiques, de perméabilité et de résistance chimique dépend de la cristallinité. Toutefois, après mise en oeuvre du PVDF, cet état cristallin est la cause de la faiblesse de l'allongement à la rupture et de l'allongement au seuil d'écoulement. Ces inconvénients empêchent d'utiliser le PVDF dans un certain nombre d'applications et en particulier dans la fabrication de tubes pour extraction pétrolière.

Pour remédier aux inconvénients cités, il a été proposé de greffer à l'homopolymère ou de copolymériser au fluorure de vinylidène un composé éthylénique non fluoré. Si les inconvénients sont diminués, ils sont malheureusement compensés par une perte des autres propriétés recherchées du PVDF.

Dans l'application particulière du PVDF au transport de hydrocarbures, comme par exemple les tubes servant à l'extraction des produits pétroliers, il a été proposé comme dans le FR.A 2.560.884, d'incorporer au PVDF des plastifiants liquides, par exemple du type polyester. Dans un premier temps cette technique permet d'améliorer l'allongement au seuil d'écoulement du PVDF et en conséquence de fabriquer des flexibles pétroliers sans risque de rupture et possèdant une souplesse suffisante. Mais on constate à l'usage, ces flexibles fonctionnant plusieurs années, que, les hydrocarbures extrayant et entraînant le plastifiant, le PVDF a perdu sa souplesse ce qui entraîne la rupture de ces flexibles sous flexion ou contrainte élevée.

La présente invention permet de remédier aux inconvénients cités tout en conservant au PVDF sa cristallinité et par conséquent ses propriétés. Elle consiste dans un composite à base de polyfluorure de vinylidène à tenue améliorée au contact des hydrocarbures caractérisé en ce qu'on incorpore au polyfluorure de vinylidène des particules d'élastomère, en quantité inférieure à 25 % en poids, possédant la capacité d'absorber les hydrocarbures et de les fixer dans le composite, ledit élastomère étant choisi parmi les polymères ou les copolymères thermoplastiques élastomériques possédant un allongement au seuil d'écoulement supérieur à 20 % ainsi que parmi les élastomères vrais. L'incorporation de ces particules permet, tout en conservant l'intégrité de la composition macromoléculaire du PVDF, tout au moins de conserver sinon d'améliorer au contact des hydrocarbures son allongement dans la limite élastique, et par voie de conséquence son allongement à la rupture. La notion de limite élastique, telle qu'entendue présentement, est mesurée à partir du sommet de la courbe de traction donnant la force de traction en fonction de l'allongement. Ce sommet, appelé seuil d'écoulement sépare la zone à comportement élastique aux faibles allongements de la zone d'écoulement plastique pour des allongements plus élevés. Cette notion est développée dans : "Introduction à la chimie macromoléculaire". G. CHAMPETIER et L. MONNERIE, pages 471-478 Editeur MASSON et Cie. A titre d'exemple, l'allongement au seuil d'écoulement entre -30 et + 150°C est pour le PVDF habituellement inférieur à 10 %. L'incorporation de plastifiant permet d'augmenter de façon notable cet allongement en le faisant passer à environ 20 %, mais cela de façon temporaire lorsque le PVDF est en contact avec un hydrocarbure. Par contre, selon l'invention, après un contact plus ou moins prolongé du composite à base de polyfluorure de vinylidène et d'élastomère avec les hydrocarbures, ce même allongement peut passer de façon durable pour le composite et par conséquent pour le polyfluorure de vinylidène, à plus de 100 % et toujours de façon durable à au moins environ 15 %.

Par le terme élastomère pour les produits utilisables dans l'invention, on entend, non seulement les élastomères vrais, mais également les polymères ou copolymères thermoplastiques élastomériques.

Dans PATENT ABSTPACT OF JAPAN, vol. 2 n° 31 (c-77), 27 Février 1978, page 4265 C 77 et CHEMICAL ABSTRACTS, vol. 88, 1978, page 34, n° 106262 sont cités des compositions pigmentaires constituées de mélange de copolymère thermoplastique ou de copolymère thermoplastique élastomérique avec du dioxyde de titane. Ces compositions sous forme de granulés sont mélangées au PVDF pour lui donner une coloration résistant aux températures élevées. De telles compositions riches en dioxyde de titane ne peuvent que nuire aux propriétés mécaniques des thermoplastiques initiaux et en particulier aux propriétés d'allongement des copolymères thermoplastiques élastomériques. En outre cette association d'oxyde de titane directement à un copolymère thermoplastique élastomérique ne peut que nuire à l'absorption des hydrocarbures par le copolymère.

Les élastomères vrais naturels ou synthétiques répondent à la notion souvent employée de caoutchouc naturel ou synthétique. Ils sont définis par ASTM, Spécial Technical Bulletin, n° 184 comme un matériau qui

2

peut être étiré, à la température ambiante, à deux fois sa propre longueur et qui une fois relaché après maintien sous tension pendant cinq minutes reprend, à 10 % près, sa longueur initiale dans le même temps.

Les thermoplastiques élastomériques sont des polymères ou copolymères qui, naturellement, sans apport de plastifiant, possèdent un comportement caoutchoutique sous faible déformation. Ce comportement caoutchoutique peut se caractériser par un allongement au seuil d'écoulement supérieur à 20 %. Ces thermoplastiques possèdent un module d'élasticité en flexion inférieur ou égal à 800 MPa à la température ambiante.

Les élastomères particulièrement recommandés dans le cadre de l'invention peuvent être choisis parmi les caoutchoucs naturels, les polyuréthanes, les copolymères EPDM, les copolymères acrylonitrile butadiène-styrène, les copolymères méthylméthacrylate - butadiène-styrène (MBS), les copolymères ester-amide et éther-amide, les copolymères éthylène-oxyde de carbone, les caoutchoucs acrylique, les copolyéthers-esters thermoplastiques, les copolymères séquencés à base de polystyrène et d'élastomère du type polyisoprène, polybutadiène, les copolymères styrène-butadiène-styrène, les copolymères éthylène-éthylacrylate, éthylène-éthylacétate et éthylène-vinylacétate ainsi que leurs terpolymères.

Ces élastomères combinés au PVDF possèdent le pouvoir d'absorber et de retenir une certaine quantité d'hydrocarbure, de préférence supérieure à 20 % de son poids, qui va jouer le rôle de plastifiant du PVDF lui conférant ainsi d'excellentes propriétés d'allongement, sans lui faire perdre ses autres qualités.

La quantité d'élastomère incorporé dans le PVDF ne dépassera pas 25 % en poids et sera de préférence inférieure à 20 %.

Il n'est pas exclu, dans le cadre de l'invention, d'incorporer au mélange, outre les adjuvants habituels, un plastifiant. L'ajout de ce plastifiant peut avoir initialement une action sur l'allongement du PVDF, cette action étant dans le temps, au fur et à mesure de son élimination par les hydrocarbures, compensée par celle de l'hydrocarbure absorbé par l'élastomère.

Les dimensions des particules d'élastomère à incorporer dans le PVDF ne sont pas critiques en ce sens que suivant le moyen mis en oeuvre pour réaliser le composite ces dimensions évoluent. Le moyen le plus usuel d'obtention du composite, consiste à mélanger à l'état fondu les deux principaux composants sous forme initiale de poudres ou de granulés dans une extrudeuse, un mélangeur à cylindres ou tout autre appareil mélangeur adapté. Il est également possible de mélanger à un latex de PVDF soit la quantité voulue de poudre d'élastomère soit un latex d'élastomère. Il va de soi que de la bonne répartition de l'élastomère dans le PVDF dépendra son efficacité dans le composite.

Le composite selon l'invention est particulièrement recommandé pour la fabrication de matériaux travaillant sous contrainte en présence d'hydrocarbures. Plus particulièrement ce composite sert à la fabrication de tubes flexibles servant à l'extraction des hydrocarbures dans l'industrie pétrolière. De tels flexibles doivent conserver leurs propriétés, en particulier leur propriété de souplesse, pendant des durées prolongées, souvent plusieurs années, dans des conditions difficiles de fatigue dynamique en flexion et de température variant d'environ 60 à 150° C.

Dans le cas particulier des tubes, ces derniers sont fabriqués classiquement par extrusion, ou, coextrusion avec un autre thermoplastique, du composite object de l'invention. Il n'est d'ailleurs pas exclu que le composite soit directement formé lors de la fabrication desdits tubes ; le PVDF et l'élastomère étant mélangés, en proportions adéquates, dans l'extrudeuse servant à la conformation des tubes. Ces tubes sont habituellement renforcés extérieurement par une gaine métallique.

Les exemples suivants illustrent l'invention sans toutefois la limiter.

## EXEMPLE 1

Au moyen d'un mélangeur BUSS PR 46 chauffé à 190° C on incorpore au PVDF (Foraflon 6000 HD), 10 % en poids de chacun des élastomères suivants :

Essai 1 :     alkylacrylate élastomère greffé méthylméthacrylate (Paraloïd® 323 B)

Essai 2 :     polyuréthane polyester (Elastolan® 60 AW).

Essai 3 :     EPDM.

Essai 4 :     polyéther ester-amide séquencé (PEBAX® 2533)

Les mélanges, granulés après un premier passage, sont remis dans le mélangeur puis regranulés.

Sous une presse à plateaux chauffés à 205° C on fabrique des plaques de 0,7 mm. d'épaisseur à partir de ces granulés. La pression exercée sur les plateaux est de 68.6•$10^5$ Pa (70 kg/cm²) pendant 3 minutes. Les plaques sont retirées et immédiatement trempées dans l'eau à température ambiance.

Des éprouvettes de traction sont découpées, puis selon la norme ASTM D 1708-06 à une vitesse de 50 mm/min on effectue l'essai de traction sur des éprouvettes conservées 40 jours à 130° C dans l'air et dans le pétrole. Les résultats obtenus sont donnés dans le tableau suivant :

| | ALLONGEMENT AU SEUIL D'ECOULEMENT EN % | | | ALLONGEMENT A LA RUPTURE en % | | |
|---|---|---|---|---|---|---|
| | Témoin | Après 40j à 130°C | | Témoin | Après 40j à 130°C | |
| | | Dans l'air | Dans le pétrole | | Dans l'air | Dans le pétrole |
| PVDF seul | 9 | 9 | 9 | 52 | 52 | 52 |
| Essai 1 | 12 | 11 | 33 | 122 | 31 | 65 |
| Essai 2 | 12 | 18 | 35 | 360 | 61 | 98 |
| Essai 3 | 10 | 8 | 35 | 150 | 16 | 39 |
| Essai 4 | 7 | 8 | 41 | 342 | 31 | 65 |

Ces résultats démontrent l'importance de la pénétration du pétrole dans le composite par l'intermédiaire de l'élastomère, ce dernier en lui-même n'apportant que peu d'avantages à l'allongement au seuil par rapport au PVDF seul.

EXEMPLE 2

Dans les conditions de l'exemple 1, on incorpore au PVDF, 10 % de dibutylsébaçte (DBS) comme plastifiant (essai 5). A ces granulés plastifiés, on incorpore, toujours dans les conditions de l'exemple 1, 5, 10 et 15 % en poids de MBS (METABLEN® C) respectivement essais 6, 7, et 8.

Après conservation des éprouvettes à 130°C dans l'air ou dans le pétrole pendant 180 heures, 17 et 31 jours, on mesure les allongements au seuil d'écoulement ainsi que les évolutions de poids des éprouvettes. Les résultats sont donnés dans le tableau I suivant.

Ce tableau illustre l'influence de l'élastomère, lorsque le composite est au contact du pétrole. Selon l'essai 5 on constate la chute dans le temps de l'allongement au seuil du PVDF parallélement à la perte du plastifiant. Par contre dans les essais 6, 7 et 8 on constate que l'élastomère n'a en lui même aucune influence dans l'air sur l'allongement au seuil du PVDF et sur l'exsudation du plastifiant, mais que son influence est importante dans le pétrole, les pertes de plastifiant étant partiellement ou totalement compensées par le pétrole, ce qui permet d'améliorer l'allongement au seuil du PVDF.

D'autre part, la perte du plastifiant hors du PVDF entraîne également un retrait de la matière. Ce retrait provoque, sur de grandes longueurs, des tensions internes rendant le PVDF plus fragile aux chocs et diminuant son aptitude à l'allongement et à la fatigue. Ce retrait est mesuré sur des tubes fabriqués à partir des matériaux des essais 5, 6 et 7, après 7 jours à 150°C dans l'air et le pétrole. Les résultats sont donnés dans le tableau II suivant. On constate que le retrait est fortement diminué pour le tube de PVDF à base d'élastomère ayant séjourné dans le pétrole.

4

TABLEAU I

| | | ALLONGEMENTS AU SEUIL D'ECOULEMENT | | | | | | EVOLUTION DE POIDS DES EPROUVETTES | | | | | |
|---|---|---|---|---|---|---|---|---|---|---|---|---|---|
| | Témoin | 180 heures | | 17 jours | | 31 jours | | 180 heures | | 17 jours | | 31 jours | |
| | 23°C | AIR | PETROLE | AIR | PETROLE | AIR | PETROLE | AIR | PETROLE | AIR | PETROLE | AIR | PETROLE |
| Essai 5 | 18 | 10 | 21 | 12 | 16 | 5 | 9 | − 9,7 | − 8,7 | − 9,8 | − 8 | − 9,8 | − 8 |
| Essai 6 | 19 | 14 | 36 | 9 | 30 | 7 | 38 | − 8,3 | − 4,7 | − 8,7 | − 4,5 | − 8,9 | − 4,5 |
| Essai 7 | 18 | 11 | 72 | 9 | 72 | 5 | 108 | − 7,6 | − 2,5 | − 7,6 | − 2,4 | − 8,5 | − 2,3 |
| Essai 8 | 31 | 8 | 86 | 9 | 53 | 4 | 131 | − 6,9 | + 1,5 | − 7,1 | + 0,9 | − 8,0 | + 0,8 |

TABLEAU II

| | Retrait en % | |
|---|---|---|
| | 150° dans l'air | 150° dans le pétrole |
| Essai 5 | 7,2 | 6,0 |
| Essai 6 | 6,8 | 4,3 |
| Essai 7 | 6,8 | 2,5 |

EXEMPLE 3

Dans les conditions de l'exemple 1, on incorpore au PVDF 10 et 20 % en poids de MBS, respectivement essais 9 et 10. Les éprouvettes sont immergées à 110°C pendant 180 heures, 17 jours et 31 jours. Les résultats comparatifs avec des éprouvettes conservées à l'air sont donnés dans le tableau III suivant.

T A B L E A U   III

| | Témoin 23°C | ALLONGEMENTS AU SEUIL D'ECOULEMENT | | | | | | EVOLUTION DE POIDS DES EPROUVETTES | | | | | |
| | | 180 heures | | 17 jours | | 31 jours | | 180 heures | | 17 jours | | 31 jours | |
| | | AIR | PETROLE | AIR | PETROLE | AIR | PETROLE | AIR | PETROLE | AIR | PETROLE | AIR | PETROLE |
|---|---|---|---|---|---|---|---|---|---|---|---|---|---|
| Essai 9 | 8 | 16 | 36 | 9 | 61 | 5 | 61 | + 0,7 | + 4,6 | + 0,7 | + 4,6 | − 0,2 | + 4,7 |
| Essai 10 | 9 | 16 | 95 | 16 | 88 | 5 | 131 | + 0,9 | + 8,7 | + 1,0 | + 8,7 | + 0,6 | + 8,7 |

## Revendications

1. Composite à base de polyfluorure de vinylidène à tenue améliorée au contact des hydrocarbures caractérisé en ce qu'on incorpore au polyfluorure de vinylidène des particules d'élastomère, en quantité inférieure à 25 % en poids, possédant la capacité d'absorber les hydrocarbures et de les fixer dans le composite, ledit élastomère étant choisi parmi les polymères ou les copolymères thermoplastiques élastomériques possédant un allongement au seuil d'écoulement supérieur à 20 % ainsi que parmi les élastomères vrais.

2. Composite selon la revendication 1 caractérisé en ce que le thermoplastique élastomérique possède un module d'élasticité en flexion inférieur ou égal à 800 MPa à la température ambiante.

3. Composite selon l'une des revendications 1 ou 2 caractérisé en ce qu'après un contact avec les hydrocarbures son allongement au seuil d'écoulement est de façon durable, au moins d'environ 15 %.

4. Composite selon l'une quelconque des revendications 1 à 3, caractérisé en ce qu'il contient un plastifiant.

5. Tube pour extraction pétrolière fabriqué à partir du composite de l'une quelconque des revendications 1 à 4.

6. Tube pour extraction pétrolière selon la revendication 5 obtenu par extrusion directe du polyfluorure de vinylidène et de l'élastomère.

## Claims

1. A polyvinylidene fluoride based composite with improved behaviour in contact with hydrocarbons, characterized in that particles of elastomer in a quantity lower than 25% by weight and having the capacity to absorb the hydrocarbons and fix them in the composite are incorporated in the polyvinylidene fluoride, said elastomer being selected from the elastomeric thermoplastic polymers or copolymers having an elongation greater than 20% at the yield point and also from the true elastomers.

2. A composite according to claim 1, characterized in that the elastomeric thermoplastic has a modulus of flectional elasticity lower than or equal to 800 MPa at ambient temperature.

3. A composite according to one of claims 1 or 2, characterized in that after contact with hydrocarbons its elongation at the yield point is permanently at least approximately 15%.

4. A composite according to any of claims 1 to 3, characterized in that it contains a plasticizing agent.

5. A pipe for oil extraction manufactured from a composite according to any of claims 1 to 4.

6. A pipe for oil extraction according to claim 5 obtained by the direct extrusion of the polyvinylidene fluoride and the elastomer.

## Patentansprüche

1. Verbundwerkstoff auf Basis von Polyvinylidenfluorid mit verbesserten Verhalten gegen Kohlenwasserstoffe, dadurch gekennzeichnet, daß man dem Polyvinylidenfluorid Elastomerteilchen in einer Menge unter 25 Gewichtsprozent zusetzt, die in der Lage sind, Kohlenwasserstoffe zu absorbieren und in dem Verbundwerkstoff zu fixieren, wobei das Elastomere aus elastomeren, thermoplastischen Polymeren oder Copolymeren mit einer Verlängerung bei der Fließgrenze über 20% und aus echten Elastomeren ausgewählt ist.

2. Verbundwerkstoff nach Anspruch 1, dadurch gekennzeichnet, daß das thermoplastische Elastomere einen Elastizitätsmodul bei Biegung kleiner oder gleich 800 MPa bei Raumtemperatur hat.

3. Verbundwerkstoff nach einem der Ansprüche 1 oder 2, dadurch gekennzeichnet, daß nach dem Kontakt mit dem Kohlenwasserstoff die Verlängerung bei der Fließgrenze beständig wenigstens etwa 15% ist.

4. Verbundwerkstoff nach einem der Ansprüche 1 bis 3, dadurch gekennzeichnet, daß er einen Weichmacher enthält.

5. Rohr für die Erdölförderung, hergestellt aus dem Verbundwerkstoff nach einem der Ansprüche 1 bis 4.

6. Rohr für die Erdölförderung nach Anspruch 5, erhalten durch direkte Extrusion des Polyvinylidenfluorids und des Elastomeren.